# EUROPEAN PATENT SPECIFICATION

(11) **EP 0 245 018 B1**
(45) Date of publication and mention of the grant of the patent: **28.02.1996**
(21) Application number: 87303813.7
(22) Date of filing: 29.04.1987
(51) Int. Cl.: C08G 59/68, C08G 59/62, C08L 63/00, C08G 59/50, C08G 59/40, C08G 59/42, C08L 51/00, C08L 9/02, C09J 163/00

(54) **Epoxy resin composition**
Epoxydharzzusammensetzung
Composition de résine époxyde

(30) Priority: 07.05.1986 US 860511
(43) Date of publication of application: 11.11.1987
(73) Proprietor: MINNESOTA MINING AND MANUFACTURING COMPANY, St. Paul, Minnesota 55133-3427 (US)
(72) Inventor: Tarbutton, Kent S. c/o Minnesota Mining and, P.O. Box 33427 St. Paul Minnesota 55133 (US); Robins, Janis c/o Minnesota Mining and, P.O. Box 33427 St. Paul Minnesota 55133 (US); Tangen, John C. c/o Minnesota Mining and, P.O. Box 33427 St. Paul Minnesota 55133 (US)
(74) Representative: Baillie, Iain Cameron

(56) References cited:
- EP-A- 0 118 270
- DE-A- 2 807 666
- DE-A- 2 811 764
- FR-A- 1 391 527
- FR-A- 2 167 723
- US-A- 3 677 978
- US-A- 3 746 686
- US-A- 4 533 715
- R. T. Morrison et al " Organic Chemistry" , fourth edition, Allyn and Bacon Inc. , 1983, pages 216, 221-223
- T.W.G. Solomons " Organic Chemistry" , third edition, J.Wiley and Sons, 1984, page 211

## Description

### Background of the Invention

This invention related to latently curable one-part epoxy resin composition. Epoxy resins, i.e., organic compounds having one 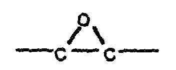 or more terminal or pendant oxirane groups,
have been widely used for many years in adhesive compositions. Various curatives, accelerators, and additives have been used with the epoxy resins to modify the curing properties and adhesive characteristics.

U.S. Patent No. 3,553,166 (Anderson et al.) and U.S. Patent No. 3,677,978 (Dowbenko et al.) disclose storage stable, elevated temperature curable epoxy resin compositions which contain epoxy resin and, as a curing agent, a metal salt complex of an imidazole. Anderson further discloses the addition of nitrogenous compounds to improve structural strength.

Other various curing systems disclosed for use with epoxy resins include dialkylamino-alkylimidazoles in U.S. Patent No. 3,912,689 (Bechara et al.) fluorakyl-sulfonate salts of a metal coordinated with imidazole or substituted imidazole ligands in U.S. Patent No. 4,101,514 (Thom), phthalic acid derivatives which are substituted by akenylamino groups in U.S. Patent No. 4,140,703, imidyl-and isoimidyl-phthalic anhydrides in U.S. Patent No. 4,160,081 (Kvita et al.), imidyl-benzene-dicarboxylic and -tricarboxylic acid derivatives in U.S. Patent No. 4,233,220 (Kvita et al.), imidazole accelerators with aromatic polyol hardeners in U.S. Patent No. 4,246,162 (Schreiber), isocyanate blocked imidazoles and imidazolines in U.S. Patent No. 4,355,228 (Beitchman et al.), naphthyl diisocyanate blocked imidazole in U.S. Patent No. 4,533,715 (Lee et al.), solutions or eutectic mixtures of imidazoles with N,N'-dihydroxyethyl-5-,5-dimethyl hydantoin or trimethylpentanediol in U.S. Patent NO. 4,417,010 (Shimp) and a liquid blend of an imidazole and a mixture of trimethylolpropane and 1,4-butanediol in European Patent Application 0 118,270 (Celanese).

French Patent Publication No. 2,167,723 discloses metal imidizole-catalyzed systems comprising a combination of a curing agent, epoxy monomer or prepolymer and metal imidazolate. The system is latent and cure is effected by heating the system.

German Patent Publication No. 2,807,666 discloses rubbery bladders produced by rotational casting in a liquid pooymer composition containing (1) an epoxy resin, (2) a liquid carboxyl-terminated polymer, (3) an amine, (4) a dihydric compound and (5) a plasticizer, the equivalent ratio of the other reactants to epoxy being from aboutg 0.70 to about 1.15.

German Patent Publication No. 2,811,764 discloses an imidizole-isocyanuric acid adduct having the following formula: 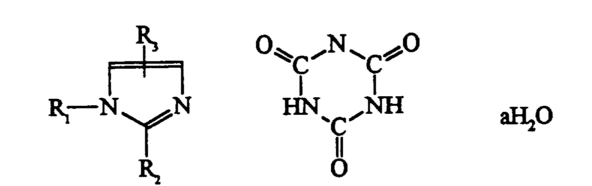 wherein R₁ is a member selected from the group consisting of a hydrogen atom, a β-[3,5-diamino-s-triazinyl-(1)]-ethyl group, R₂ stands for a monovalent hydrocarbon group having up to 17 carbon atoms, R₃ is a member selected from the group consisting of a hydrogen atom and an alkyl group having up to 4 carbon atoms, with theproviso that when R₁ is a hydrogen atom, R₂ is a methyl or phenyl group and R₃ is a hydrogen atom and when R₁ is a b-cyanoethyl group, R₁ is a phenyl group and R₃ is a hydrogen atom, and n is a number of from 0 to 2.

### Summary of the Invention

The present invention provides storage-stable, thermally curable, one-part epoxy resin composition having a specified pot life comprising a curable epoxide resin; a curative amount of aliphatic or non-aromatic cyclic polyol having about 2 to 18 carbon atoms, at least one hydroxy group of said polyol being primary and at least two hydroxyl groups of said polyol being primary or secondary, and said polyol being free of electron-withdrawing substituents, and large substituents which would cause steric hindrance, in the α-position in relation to the carbon attached to the methylol group of the polyol and preferably being insoluble in the epoxide resin; and a catalytic amount of an imidazole compound selected from
(a) compounds represented by the formula

   M¹(L¹)ₐ(X¹)_{b}

   where N¹ is Ni⁺⁺, CU⁺⁺, or Co⁺⁺, 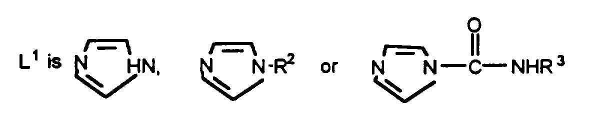
   - where R: is alkyl having 1 to 18 carbon atoms, cyanoalkyl having 1 to 4 carbon atoms, phenyl, or substituted phenyl, and R³ is alkyl having 1 to 18 carbon atoms, phenyl, or substituted phenyl,
   - X¹: is -R⁴(COO⁻)₂ where R⁴ is phenyl, naphthyl, or CₘH₂ₘ
   where m is 1, or 2, or
   X¹ is -R⁵(COO⁻)_{c}
   where R⁵ is phenyl or naphthyl and e is 3, or 4, or
   X¹ is an anion of a strong inorganic acid, i.e., an acid having a pKₐ of less than 2,
   a is 2, 4 or 6, and
   b is 0.5, 0.67, 1, or 2 depending on the valence of X¹;
(b) compounds represented by the formula LX
   - where L: is 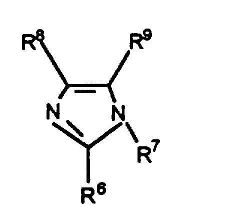
   - where R⁶: is -H,-CₙH₂ₙ₊₁ or 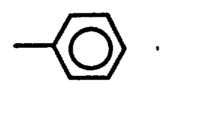
   - n: being a number of from 1 to 16,
   - R⁷: is -H, -CH₃, -C₂H₅, -C₂H₄CN, or 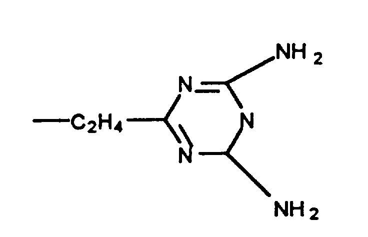
   - R⁸: is -H, -CH₃, -C₂H₅, or 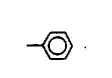
   - R⁹: is -H,
   - X: is -R⁴(COOH)₂ where R⁴ is phenyl naphthyl, or CₘH_{2M} where m is 1, or 2, or
   - X: is -R⁵(COOH)ₑ where R⁵ is phenyl or naphthyl and e is 3, 4, or 5, or
   - X: is isocyanuric acid, and
   - L³: is 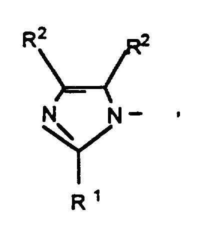
(c) compounds represented by the formula

   M³(L³)ₑ

   - where M³: is Ni⁺⁺, CU⁺⁺, or Co⁺⁺, Zn⁺⁺, CU⁺, or Ag⁺,
   - where R¹: is -H, 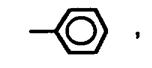 or -CₙH₂ₙ₊₁, n being a number of from 1 to 16, and each R is-CH₃, or -CH₂OH, e is 1 or 2;
(d) compounds represented by the formula L⁴
   - where L⁴: is 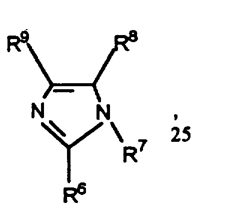
   - where R₆, R₇, R₈, and R₉: are the same for compound (b); and
(e) compounds represented by the formula 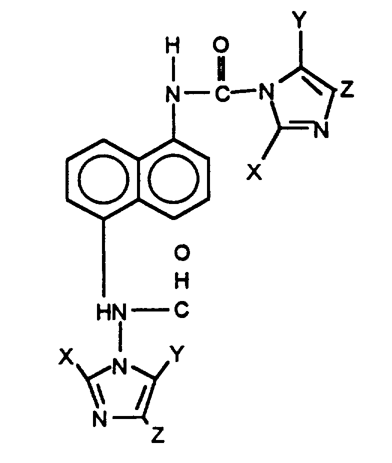 wherein X, Y, and Z may be the same or different, and each may be hydrogen, a lower alkyl or aryl having 1-12 carbon atoms, halo or nitro.

The composition also preferably contains a toughening agent. A flow control agent may also be present.

The cured composition is useful as an adhesive, and in coatings, and molded, cast, and potted products. As an adhesive, the composition provides excellent shear and impact strength.

### Detailed Description of the Invention

Epoxide group-containing materials useful in the compositions of the invention are glycidyl ether derivatives having an oxirane ring polymerizable by ring opening. Such materials, broadly called glycidyl ether epoxides, include monomeric epoxy compounds and epoxides of the polymeric type.

These epoxide group-containing materials can vary from low molecular weight monomeric materials to high molecular weight polymers and can vary in the nature of their backbone and substituent groups. Illustrative permissible substituent groups include halogens, ethers, and siloxane groups. The molecular weight of the epoxy-containing materials can vary from 50 to about 100,000 or more. Mixtures of various epoxy-containing materials can also be used in the composition of this invention.

Such epoxide group-containing materials are well known and include such epoxides as glycidyl ether type epoxy resins and the diglycidyl ethers of bisphenol A and of novolak resins, such as described in "Handbook of Epoxy Resins" by Lee and Neville, McGraw-Hill Book Co., New York (1967).

These epoxide group-containing materials which are useful in the practice of this invention include glycidyl ether monomers of the formula 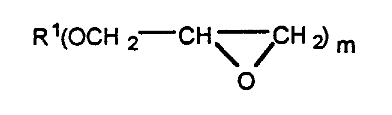 where R¹ is alkyl or aryl and m is an integer of to 6. Examples are the glycidyl ethers of polyhydric phenols obtained by reacting a polyhydric phenol with an excess of chlorohydrin such as epichlorohydrin (e.g., the diglycidyl ether of bisphenol A, i.e., 2,2-bis (4,4'-epoxy propoxyphenyl)propane).

There are a host of commercially available epoxide group-containing materials which can be used in this invention. In particular, epoxides which are readily available include glycidol, diglycidyl ethers of bisphenol A (e.g., those available under the trade designations Epon^{™} 828 available from Shell Chemical Co., and DER™-332, and DER™-334 available from Dow Chemical Co.), diglycidyl ethers of bisphenol F (e.g., Epiclon™ 830 from Dainippon Ink & Chemicals, Inc.) silicone resins containing diglycidyl epoxy functionality, flame retardant epoxy resins (e.g., DER^{™}-580, a brominated bisphenol-type epoxy resin available from Dow Chemical Co.), 1,4-butanediol diglycidyl ethers (e.g., Araldite^{™} RD-2 available from Ciba-Geigy), polyglycidyl ethers of phenol formaldehyde novolak (e.g., DEN™-431 and DEN™-438 available from Dow Chemical Co.), and resorcinol diglycidyl ethers (e.g., Kopoxite^{™} available from Koppers Company, Inc.). Preferably the epoxide group-containing material is the diglycidyl ether of bisphenol A or bisphenol F. Most preferably the epoxide group-containing material is the diglycidyl ether of bisphenol A.

The polyols useful in the present invention are aliphatic or non-aromatic cyclic polyols having 2 to 18 carbon atoms, at least two hydroxyl groups, preferably at least three hydroxyl groups, with at least one hydroxyl group, preferably at least two hydroxyl groups being primary and at least two hydroxyl groups being primary or secondary. The polyol should be free of strong acids, the amide group -CONH₂ and electron-withdrawing substituents such as 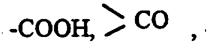 -CH₂X where X is halogen, and preferably also free of large groups which cause steric hindrance, in the α-position in relation to the carbon atom attached to the methylol group of the polyol. Such groups, except strong acid groups, can be present in positions other than α to the carbon attached to the methylol group of the polyol. The term "polyol" also includes derivatives of the above-described polyols such as the reaction product of the polyol with di- or poly-isocyanate, or di- or poly-carboxylic acid, the molar ratio of polyol to -NCO, or -COOH being 1 to 1. The polyol is preferably insoluble in the epoxide resin to increase storage stability.

The polyol is present in the composition in an amount to provide epoxide, i.e., 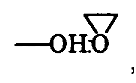 ratio of about 0.5:1 to 1:1, preferably 0.7:1 to 0.8:1 which is a curative amount, i.e., an amount which is sufficient to react with the epoxide and cause the composition to cure more rapidly when heated. The addition of the curative amount of the polyol provides the composition with a reactivity, i.e., the length of time for exotherm to peak when held, at 137°C, of less than about 10 minutes, more preferably less than about 5 minutes, most preferably less than about 2 minutes.

Examples of preferred polyols include trimethylol ethane, trimethylol propane, trimethylol propane, trimethylol aminoethane, ethylene glycol, 2-butene-1,4-diol, pentaerythritol, dipentaerythritol, and tripentaerythritol. Other useful polyols include 1,3-butane diol, 1,4-butane diol, 2-diethyl-1,3-pentane diol, and 2,2-oxydiethanol.

The imidazole compounds useful in the present invention are compounds selected from
(a) compounds represented by the formula

   M¹(L¹)ₐ(X¹)_{b}

   where N¹ is Ni⁺⁺, CU⁺⁺, or Co⁺⁺,
   - L¹: is 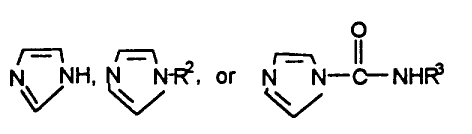
   - where R: is alkyl having 1 to 18 carbon atoms, cyanoalkyl having 1 to 4 carbon atoms, phenyl, or substituted phenyl, e.g., ethylphenyl or tolyl, R³ is alkylene having 1 to 18 carbon atoms, phenyl, or substituted phenyl,
   - X¹: is -R⁴(COO⁻)₂ where R⁴ is phenyl, naphthyl, or CₘH₂ₘ where m is 1, or 2, or X¹ is -R⁵(COO⁻)ₑ
   where R⁵ is phenyl or naphthyl and e is 3, or 4, or
   X¹ is an anion of a strong inorganic acid having a pKₐ of less than 2,
   a is 2, 4 or 6, and
   b is 0.5, 0.67, 1, or 2 depending on the valence of X¹;
(b) compounds represented by the formula LX
   - where L: is 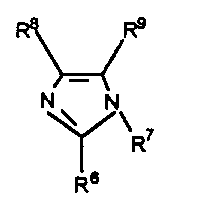
   - where R⁶: is -H,-CₙH₂ₙ₊₁ or 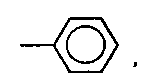 n being a number of from 1 to 16,
   - R⁷: is -H, -CH₃, -C₂H₅, -C₂H₄CN, or 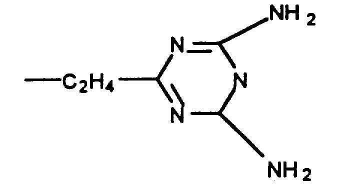
   - R⁸: is -H, -CH₃, -C₂H₅, -CH₂OH, or 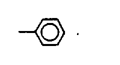
   - R⁹: is -H,
   - X: is -R⁴(COOH)₂ where R⁴ is phenyl naphthyl, or CₘH₂ₘ where m is 1, or 2, or
   - X: is -R⁵(COOH)ₑ where R⁵ is phenyl or naphthyl and e is 3, 4, or 5, or
   - X: is isocyanuric acid, and
(c) compounds represented by the formula

   M³(L³)ₑ

   where M³ is Ni⁺⁺, CU⁺⁺, or Co⁺⁺, Zn⁺⁺, CU⁺, or Ag⁺,
   - L³: is 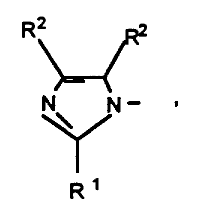
   - where R¹: is -H, 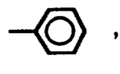 or -CₙH₂ₙ₊₁, n being a number of from 1 to 16, and each R is -CH₃, 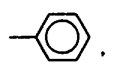 or -CH₂OH, e is 1 or 2;
(d) compounds represented by the formula L⁴
   - where L⁴: is 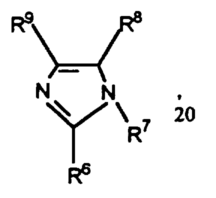
   - where R₆, R₇, R₈, and R₉: are the same for compound (b); and
(e) compounds represented by the formula 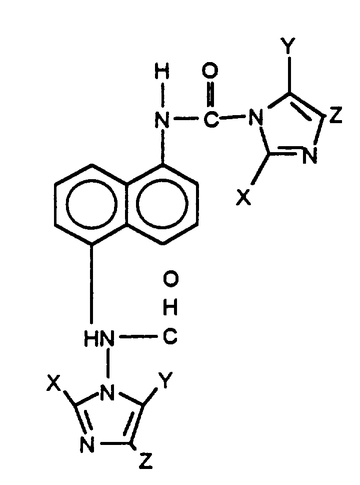 wherein X, Y, and Z may be the same or different, and each may be hydrogen, a lower alkyl or aryl having 1-12 carbon atoms, halo or nitro.

The imidazoles or imidazole containing compounds, hereinafter termed "imidazoles" are present in the composition in catalytic amounts, i.e., amounts sufficient to catalyze the reaction between the epoxide resin and the polyol on heating of the composition. Preferably, the amount of the imidazole used is 1 to 10 weight percent, more preferably 3 to 7 weight percent based on the weight of the epoxide and polyol present. Preferably the imidazole is insoluble in the epoxide resin to provide increased storage stability.

Examples of suitable imidazoles include hexakis (imidazole) nickel phthalate, hexakis (imidazole) nickel benzene tetracarboxylate, bis(imidazole) nickel oxalate, tetrakis (imidazole) nickel malonate, hexakis (imidazole) nickel hexafluorotitanate, hexakis (imidazole) cobaltous hexafluorotitanate, tetrakis (imidazole) cupric hexafluorotitanate, hexakis (imidazole) nickel phosphate, hexakis (imidazole) nickel monohydrogen phosphate, hexakis (imidazole) nickel dihydrogen phosphate, 2-phenyl-4-methyl-5-hydroxymethyl imidazole, 2-phenyl-4,5-dihydroxymethyl imidazole, 1-cyanoethyl-2-undecylimidazole trimellitate, 1-cyanoethyl-2-phenyl imidazole trimellitate, 2,4-diamino-6-[2-methylimidazolyl-(1)]ethyl-s-triazine, imidazole/oxalic acid adduct, 1-cyanoethylimidazole/malonic acid adduct, 2-phenylimidazole/isocyanuric acid adduct, silver imidazolate silver-2-ethyl-4-methyl imidazolate copper(I)-2-phenylimidazolate, and nickel imidazolate. Particularly preferred imidazoles include hexakis(imidazole) nickel phthalate, hexakis(imidazole) nickel persulfate, 1-cyanoethyl-2-undecylimidazole trimellitate, and 1-cyanoethyl-2-phenylimidazole trimellitate.

The metal imidazole salts, i.e., phthalates, carboxylates, oxalates, malonates, titanates, etc., can be prepared by adding a solution of 0.2 equivalents of the sodium or potassium salt of the corresponding acid in 100 ml water to a solution of 0.1 mol (Ni(OAc)₂.4H₂O and 0.6 mol imidazole in 250 ml water at 50°C. After cooling to 5°C, the desired metal imidazole salt precipitates, is filtered, washed, and dried.

The composition preferably contains a toughening agent to aid in providing the desired overlap shear and impact strength. Suitable toughening agents include polymeric compounds having both a rubbery phase and a thermoplastic phase or being capable of forming, with the epoxide group-containing material, both a rubbery phase and a thermoplastic phase on curing and which inhibit cracking of the cured epoxy composition.

A preferred class of polymeric toughening agents which are capable of forming, with the epoxide group-containing material, both a rubbery phase and a thermoplastic phase on curing are carboxyl-terminated butadiene acrylonitrile compounds having the general formula 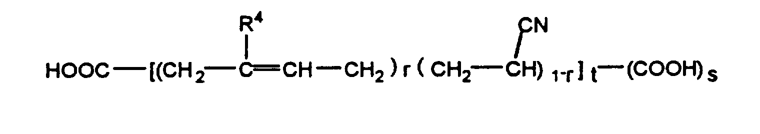 where R⁴ is hydrogen or a methyl group, r is 0.90 to 0.6, s is 1 to 3, and t is 16 to 50. The carboxyl-terminated butadiene acrylonitrile compounds are preferably prereacted with a diglycidyl ether of bisphenol A at, for example, a ratio of 30 to 70 parts by weight of the carboxyl-terminated butadiene acrylonitrile compound to 70 to 30 parts by weight of the diglycidyl ether of bisphenol A to increase the pot-life of the composition and provide increased shear strength at high humidity. Commercially available carboxyl-terminated butadiene acrylonitrile compounds include Hycar 1300x8, Hycar 1300x13, and Hycar 1300x17 available from B. F. Goodrich.

Other preferred polymeric toughening agents are graft polymers which have both a rubbery phase and a thermoplastic phase, such as those disclosed in U.S. Patent No. 3,496,250. These graft polymers have a rubbery backbone with a thermoplastic polymer grafted thereto. Examples of such graft polymers include methacrylate/butadiene-styrene, acrylate-methacrylate/-butadiene-styrene and acrylonitrile/butadiene-styrene polymers. The rubbery backbone preferably can be prepared so as to constitute from 95 percent to 40 percent by weight of the total graft polymer, and the thermoplastic monomer or group of monomers which are polymerized in the presence of the rubbery backbone constitute from 5 percent to 60 percent by weight of the graft polymer.

Further preferred polymeric toughening agents which have both a rubbery phase and a thermoplastic phase are acrylic core-shell polymers wherein the core is an acrylic polymer having a glass transition temperature below 0°C, such as polybutyl acrylate or polyosooctyl acrylate, and the shell is an acrylic polymer having a glass transition temperature above 25°C, such as polymethylmethacrylate. Commercially available core-shell polymers include Acryloid™ KM 323, Acryloid™ KM 330, and Paraloid™ BTA 731, all available from Rohm and Haas Co.

For the greatest toughening effect, both the carboxyl-terminated butadiene acrylonitrile and the core-shell polymers are used in combination in the composition.

The toughening agents are preferably present in the composition in an amount of 8 to 34 weight percent, more preferably 14 to 28 weight percent, most preferably 18 to 24 weight percent based on the weight of the epoxide resin and polyol in the composition. When a combination of carboxyl-terminated butadiene acrylonitrile and core-shell polymers are used, the weight ratio is preferably 3:1 to 1:3, more preferably 2:1, most preferably 1:1, respectively.

The composition preferably contains a flow control agent or thickener, to provide the desired rheological characteristics to the composition. Suitable flow control agents include fumed silicas, such as treated fumed silica, Cab-O-Sil™ TS 720, and untreated fumed silica Cab-O-Sil™ MS, available from Cabot Corp., and short fibers, such as cotton and Kevlar^{™} pulp, a high-temperature polyamide fiber available from DuPont Co., with treated fumed silica being preferred. When the composition is to be used as a structural adhesive, the flow control agent is preferably present in an amount, e.g., generally 2 to 5 weight percent, to provide an observable sag of less than 2 mm, more preferably 0 mm.

The composition may contain a reactive diluent to aid in controlling the press-flow characteristics of the composition. Suitable diluents are compounds having at least one glycidyl ether terminal portion and, preferably, a saturated or unsaturated cyclic backbone. Examples of such diluents include: diglycidyl ether of cyclohexane dimethanol, diglycidyl ether of resorcinol, p-tert-butyl phenyl glycidyl ether, cresyl glycidyl ether, diglycidyl ether of neopentyl glycol, triglycidyl ether of trimethylolethane, triglycidyl ether of trimethylolpropane, triglycidyl p-amino phenol, N,N'-diglycidylaniline, N,N,N',N',-tetraglycidyl meta-xylylene diamine, and vegetable oil polyglycidyl ether. The minimum amount of reactive diluent needed to provide acceptable press-flow values should be used in the composition as the addition of reactive diluent may reduce the lap shear strength and impact strength. When the composition is to be used as an adhesive, the reactive diluent may reduce the lap shear strength and impact strength. When the composition is to be used as an adhesive, the reactive diluent preferably provides a press-flow value of less than 100 sec., more preferably less than 50 sec. when tested according to GM Test 9021, Method M using a pressure of 551.6 kPa.

The epoxy resin composition can also contain conventional additives such as fillers, e.g., aluminum powder, carbon black, glass bubbles, talc, clay, calcium carbonate, barium sulfate, titanium dioxide, silicas, silicates, and mica, with aluminum powder being preferred.

The compositions of the invention have a pot life, i.e., length of time in which viscosity doubles, of at least 3 days, preferably at least 30 days, most preferably more than 60 days at 22°C and at least 12 hours, more preferably about 3 days, most preferably at least 14 days at 35°C. Both the selection ofthe polyol and the imidazole affect the pot life of the composition. Generally, pot life increases when the polyol and imidazole are insoluble in the liquid portion of the composition at temperatures of 25 to 35°C.

The reactivity of the composition is such that the length of time for the exotherm to peak when tested using a differential scanning calorimeter held at a temperature of 137°C is less than 10 minutes, preferably, less than 5 minutes, most preferably less than 2 minutes.

The epoxy resin compositions, when used as adhesives with electrocoated galvanized steel, are capable of providing initial room temperature (22°C) impact strength of at least 11400 J/m and impact strengths at -30°C of at least 2200 J/m preferably at least 4400 J/m, more preferably at least 11,400 J/m and an overlap shear strength of at least 7 MPa, preferably at least 10.5 MPa, more preferably at least 13.5 MPa, when cured at a temperature of 165°C for 30 minutes. The compositions, in the preferred embodiments, are capable of retaining impact strength of at least 2200 J/m, more preferably 4400 J/m, most preferably 11,400 J/m after immersion in boiling water for 24 hours, and are capable of retaining overlap shear strength of at least 5 MPa, preferably at least 7 MPa, most preferably at least 10 MPa, after 24 hours submersion in boiling water and after 10 minutes at 80°C.

To determine lap shear strength and impact strength, samples are prepared using electrocoated galvanized steel coupons (0.8 mm thick, 25.4 mm wide, 76.2 mm long) or etched aluminum test pieces (1.6 mm thick, 25.4 mm wide, 76.2 mm long). Each steel coupon is wiped with oil (type KA-45M, available from H. A. Montgomery Co.) using a saturated cheesecloth. After 10 minutes, excess oil is removed by wiping twice with a clean cheesecloth. Aluminum coupons are prepared by using an FPL (Forest Products Laboratories) etch (immersion in a sulfuric acid/chromic acid bath) followed by a water rinse and drying. Adhesive is applied over an end portion of one coupon. Two 2.5 cm lengths of 0.25 mm piano wire are placed across the adhesive about 8 mm apart. An end portion (1.25 cm) of a second test panel is placed over the adhesive to form a 1.25 cm overlap. The test panels are clamped at each edge of the overlap using 0.94 cm capacity binder clips No. 10020 available from IDL Mfg. and Sales Corp., Carlstadt, NJ, until the adhesive is cured either in a forced air oven at 165°C for 30 minutes or where the coupons are steel, by electromagnetic inductive heating using a Lepel Type T-2.5-1-KC-B-W Model T-254-62 generator, available from Lepel Corp., with a 4-turn box coil (6.25 cm sq x 3.125 cm deep) of 0.47 cm diameter copper tubing for a period of from 2.5 to 3.5 seconds. During inductive heating, induced current dissipated by the metal as heat heats the surface of the specimen in contact with the adhesive, thereby initiating rapid cure.

Lap shear strength is determined using ASTM Test Method D 1002-2 initially (after cooling), after immersion in boiling water for 24 hours followed by air drying for 12 hours and at 80°C by equilibrating the coupons for 10 minutes at 80°C in a constant temperature chamber and testing the coupons while in the constant temperature chamber. Impact strength is determined on adhered coupons stored at -30°C for at least two hours and tested immediately after removal from storage, or on adhered coupons at room temperature (about 22°C) and after immersion in boiling water for 24 hours followed by air drying for 12 hours. The adhered coupons are supported horizontally about 8 mm from each end and subjected to impact by a 1680 g steel wedge, 6.35 cm in height and having a rounded (6.35 mm radius) nose hardened to Rockwell C-50 to C-60 suspended from a fulcrum by a 1.1 cm diameter, 47.6 cm long rod, the rod being permitted to swing down from the horizontal to the vertical through 90°, and the nose of the wedge impacting the sample as the vertical position is reached.

Sag resistance of the composition is measured on electrocoated steel panels which have been wiped with oil as for the shear and impact strength tests. A 0.48 cm diameter bead 10 cm long is applied with a caulking gun on a steel panel lying horizontally. The panel is then placed in a vertical position with the bead horizontal. The amount of sag or slump exhibited by the bead is measured after 4 hours. The bead preferably sags less than 2 mm. More preferably, the bead exhibits no sag.

The pot life of the adhesive composition is the length of time during which the viscosity of the composition doubles at a given temperature. The reactivity of the composition is the time to cure (exotherm peak) when a 10 mg sample is held at 137°C in a differential scanning calorimeter.

In the following non-limiting examples, all parts are by weight unless otherwise specified.

### Examples 1 and 2

Adhesive compositions were prepared using the following formulations:

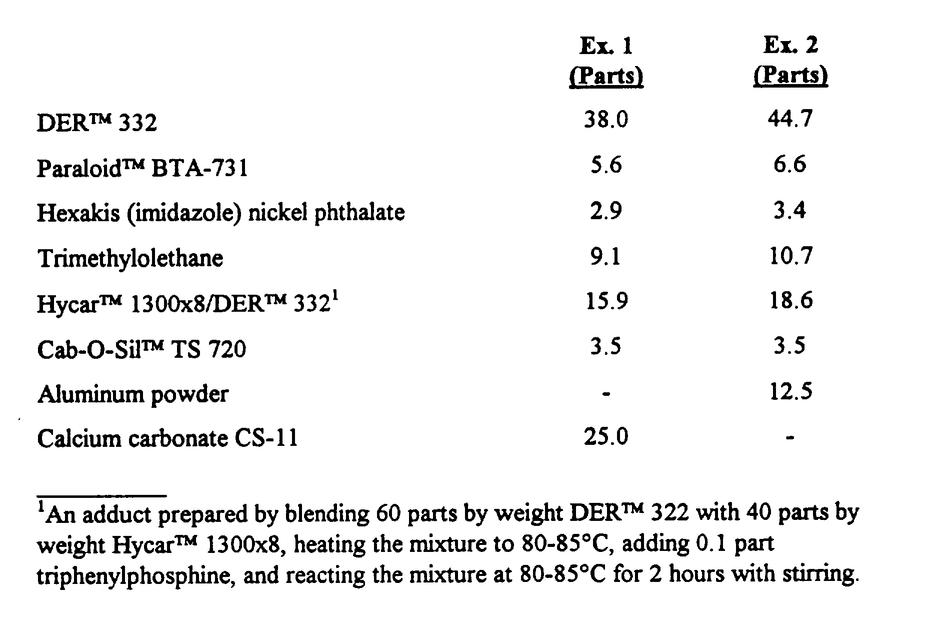

In preparing the compositions of Examples 1 and 2, the epoxide (DER™ 332) is preheated to 120°C, the Paraloid™ BTA 731 is added, and the mixture is agitated under high shear for 1 hour at 120°C. A preblend of the Hycar 1300 x 8 adduct, the trimethylolethane and the hexakis (imidazole) nickel phthalate is passed through a paint mill three times to achieve a uniform mix. These preblends are combined and the Cab-O-Sil^{™} TS720, aluminum powder, and the calcium carbonate are added with mixing until a uniform composition is attained.

Samples were prepared as described above using electrocoated galvanized steel and cured by inductive heating for the time set forth in Table 1. Tests were run for initial lap shear strength at 22°C, the results being reported in Table 1.

**Table 1**

| **Cure time** | **Lap shear strength (MPa)** | |
|---|---|---|
| **(sec)** | **Ex. 1** | **Ex. 2** |
| 2.7 | 5.3 | 5.5 |
| 2.8 | 10.9 | 8.3 |
| 2.9 | 10.6 | 9.7 |
| 3.0 | 10.1 | 11.0 |
| 3.1 | 9.7 | 11.7 |
| 3.2 | 6.7 | 11.7 |

### Examples 3 and 4

In Examples 3 and 4, samples were prepared as in Examples 1 and 2, respectively, except that the adhesive composition was cured in a forced air oven for 30 minutes at 165°C. The samples were tested for initial lap shear strength at room temperature, and after 24-hour immersion in boiling water and for initial lap shear strength at room temperature and after 24-hour immersion in boiling water. Each composition was tested for press-flow value. the results are shown in Table 2.

**Table 2**

| | | **Lap shear strength (MPa)** | | **Impact strength (J/mx10) at 22°C** | |
|---|---|---|---|---|---|
| **Ex.** | **value (sec)** | **Initial** | **24-hour boil** | **Initial** | **24-hour boil** |
| 3 | 85 | 14.9 | 9.8 | ≥114 | 55 |
| 4 | 50 | 15.0 | 10.8 | ≥114 | ≥114 |

### Examples 5-8

In Examples 5-8, adhesive compositions were prepared as in Examples 1 and 2 using the following formulations:

| | **Ex. 5 (parts)** | **Ex. 6 (parts)** | **Ex. 7 (parts)** | **Ex. 8 (parts)** |
|---|---|---|---|---|
| Epon™ 828 | - | 48.8 | 37.2 | 36.2 |
| DER™ 332 | 36.1 | - | - | - |
| Paraloid™ BTA-731 | 8.5 | 11.6 | - | 18.7 |
| Hexakis (imidazole) nickel phthalate | 2.7 | 3.6 | 2.8 | 2.7 |
| Trimethylolethane | 8.6 | 11.6 | 8.9 | 8.7 |
| Hycar™ 1300x8/DER™ 332¹ | 15.1 | 20.4 | 22.2 | 15.1 |
| Cab-O-Sil™ TS 720 | 4.0 | - | 4.0 | 3.5 |
| Aluminum powder | 25.0 | - | 25.0 | 25.0 |

Samples were prepared and tested as described above in Examples 3 and 4. The results are shown in Table 3.

**Table 3**

| | **Press-flow** | **Lap shear strength (MPa)** | | **Impact strength (J/mx10) at 22°C** | |
|---|---|---|---|---|---|
| **Ex.** | **value (sec)** | **Initial** | **24-hour boil** | **Initial** | **24-hour boil** |
| 5 | 190 | 13.7 | 12.3 | ≥114 | 102 |
| 5 | 103 | 14.6 | 10.5 | 98 | 100 |
| 7 | 70 | 13.6 | 7.9 | ≥114 | 75 |
| 9 | 163 | 14.5 | 12.7 | ≥114 | 114 |

### Example 9 and Comparative Example 1

In Example 9, compositions were prepared, using the following formulation with various polyol curing agents in the amounts shown in Table 4.

| | **Parts by Weight** |
|---|---|
| DER™ 332 | 67.2 |
| Paraloid™ BTA-731 | 16.0 |
| DER™ 332/Hycar™ 1300x8 adduct | 28.0 |
| Nickel imidazole phthalate | 5.0 |
| Cab-O-Sil™ TS 720 | 5.2 |
| Aluminum powder | 32.6 |
| Polyol | - |

The Paraloid™ BTA 731 (toughening agent) is predispersed in the epoxide (DER™ 332) in a high shear mixer at 150°C and mixed for one to two hours. To this dispersion are added the prepared adduct and the trimethylol propane. This mixture is mixed for 5 minutes and then cooled. The imidazole catalyst is then added, followed by addition of the Cab-O-Sil™ TS-720 and the aluminum powder. Mixing is continued using a paint mill until all materials are well dispersed.

In Comparative Example 1, an epoxy resin composition was prepared as in Example 9, except that no polyol was added.

The compositions were tested for pot life and reactivity. Samples were prepared using electrocoated galvanized steel coupons as described hereinabove, with oven curing at 165°C for 30 minutes. Samples tested for lap shear strength at 80°C were post-cured at 200°C for 30 minutes. The results are shown in Table 4.

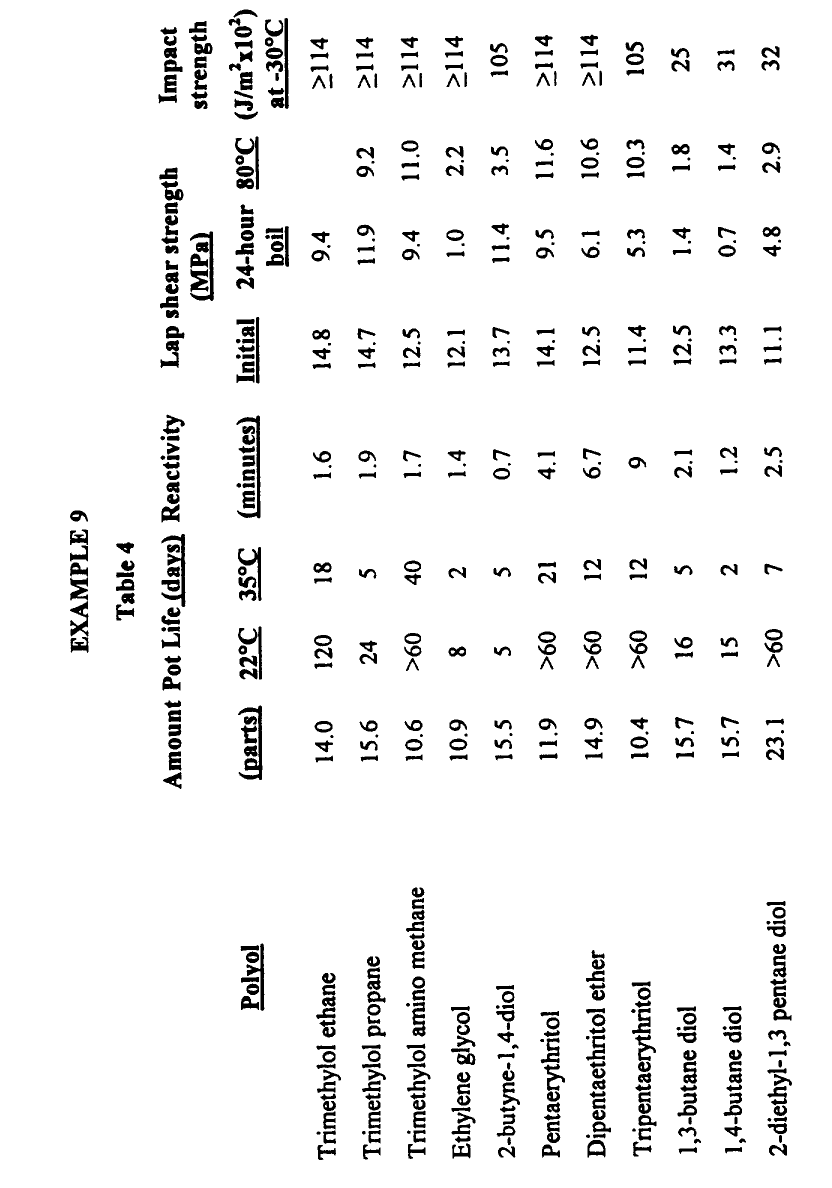

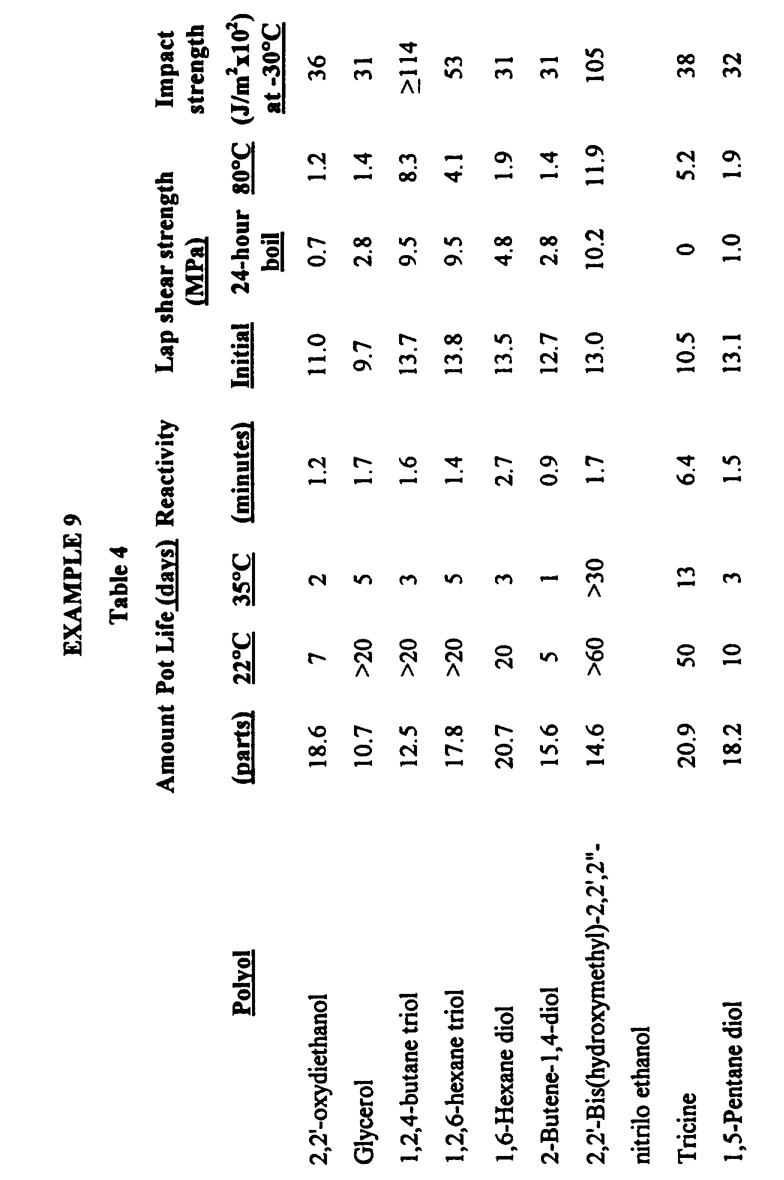

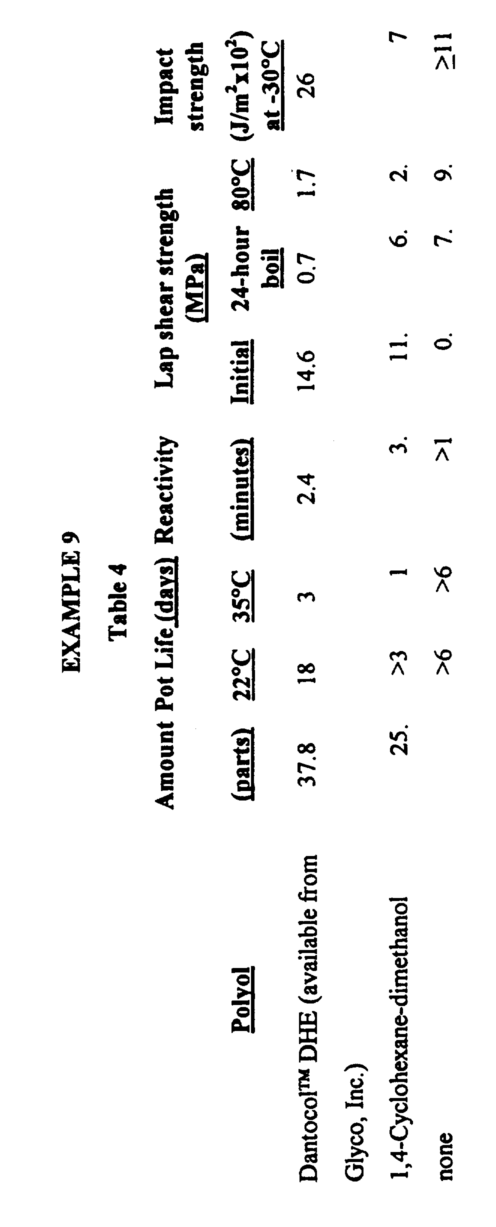

### Example 10

In Example 10, compositions were prepared, as described in Examples 10-34, using the following formulation with various imidazole catalysts as set forth in Table 5.

| | **Parts by Weight** |
|---|---|
| DER™ 332 | 67.2 |
| Paraloid™ BTA-731 | 16.0 |
| DER™ 332/Hycar™ 1300x8 adduct | 28.0 |
| Trimethylol propane | 15.6 |
| Cab-O-Sil™ TS 720 | 5.2 |
| Aluminum powder | 32.6 |
| Imidazole (various) | 5.0 |

Electrocoated galvanized steel coupons were prepared and tested for lap shear strength and impact strength. Test results are shown in Table 5.

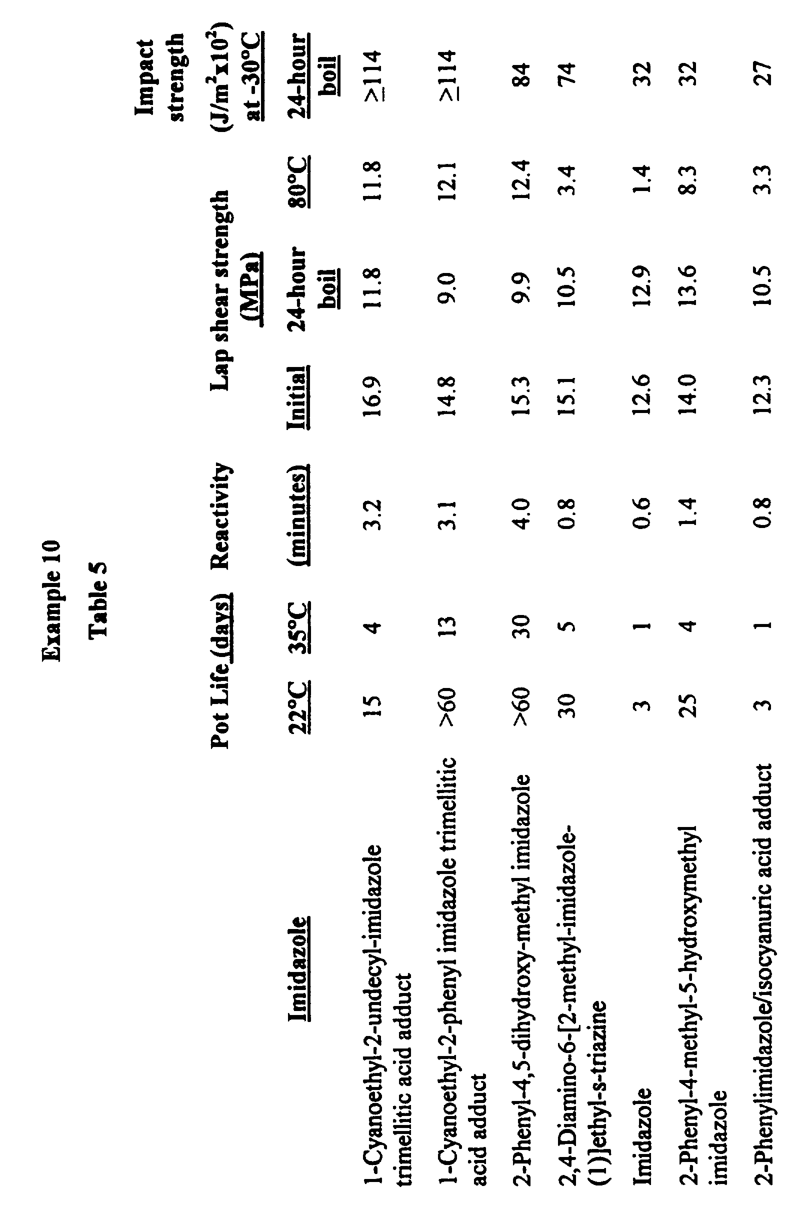

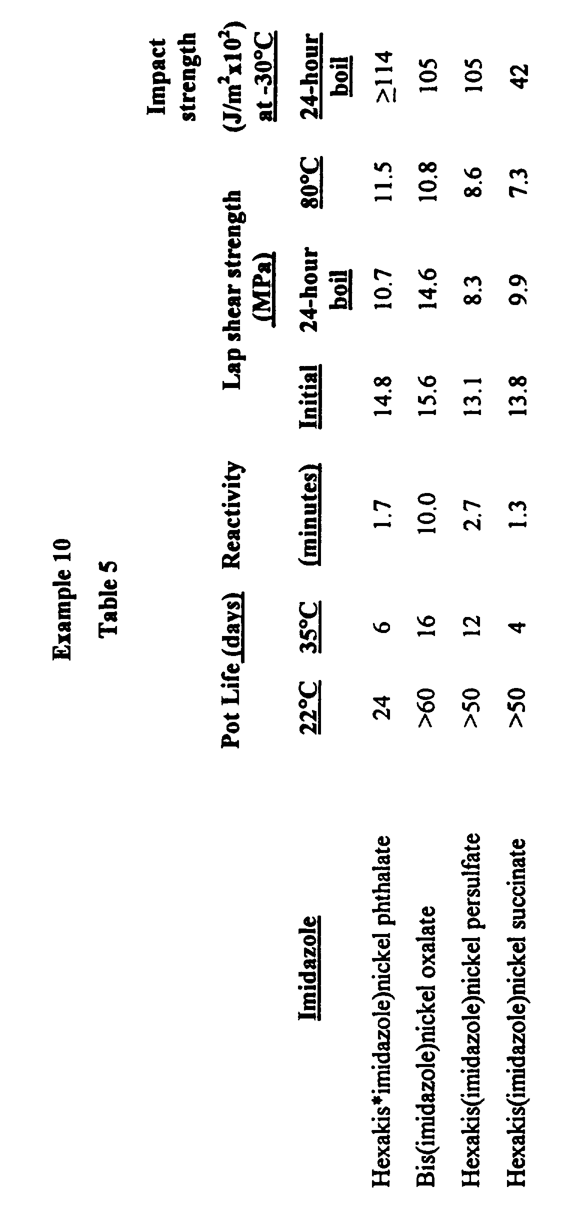

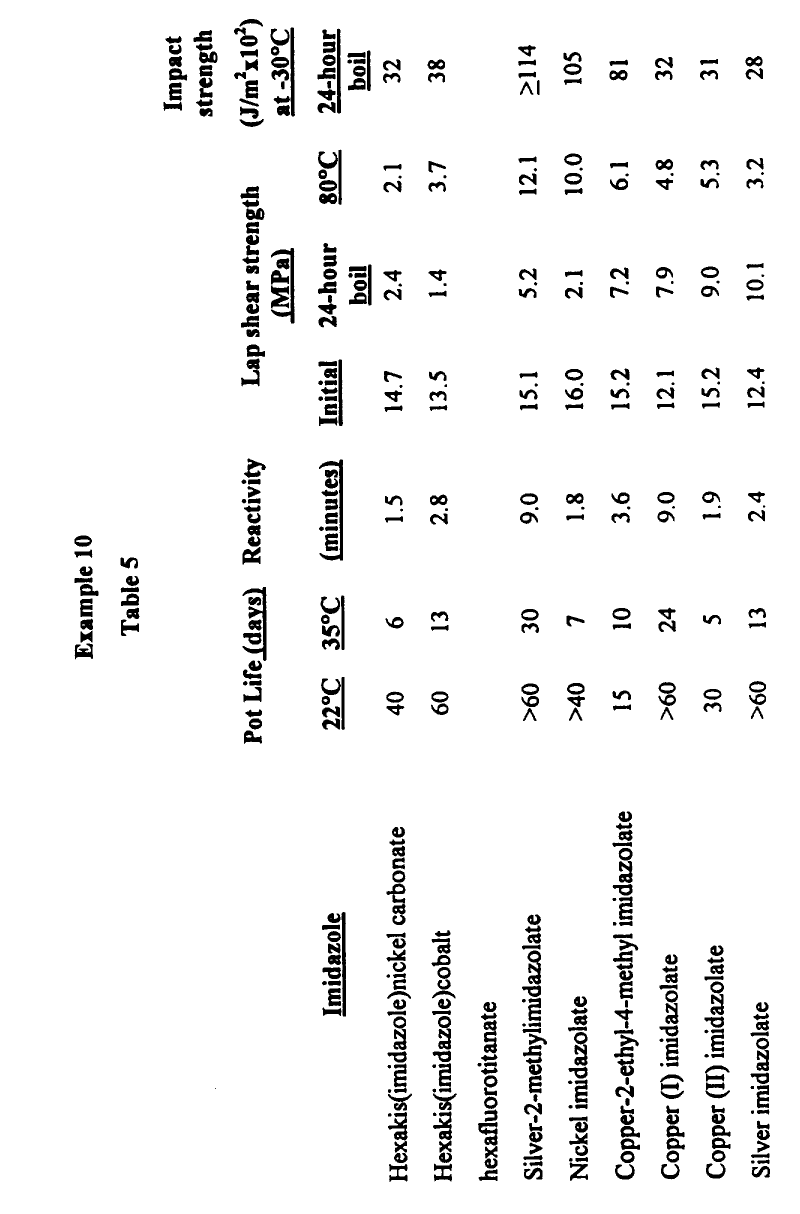

### Example 11

In Example 11, compositions were prepared as described in Examples 5 except that reactive diluents, as set forth in Table 6, were added to the Paraloid™ BTA 731 and Epon™ 828 predispersion with the formulations being as follows:

| | **Parts by Weight** |
|---|---|
| Epon™ 828 | 34.7 |
| Paraloid™ BTA-731 | 6.2 |
| Reactive diluent | 5.2 |
| Hycar™ 1300x8/DER™ 332 adduct | 14.5 |
| Trimethylolethane | 8.3 |
| Hexakis (imidazole) nickel phthalate | 2.6 |
| Cab-O-Sil™ TS 720 | 3.5 |
| Aluminum powder | 25.0 |

Each composition was tested for press-flow value, lap shear strength, and impact strength after during at 165°C for 30 minutes. The results are set forth in Table 6.

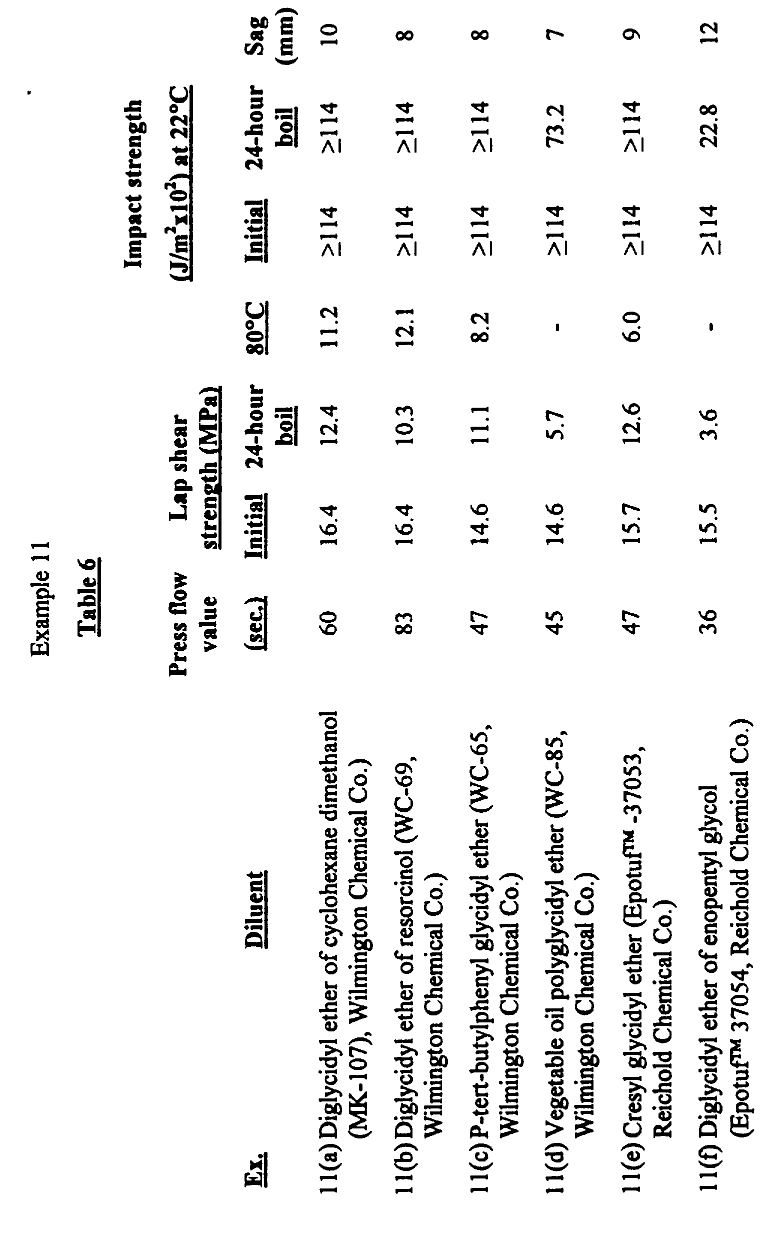

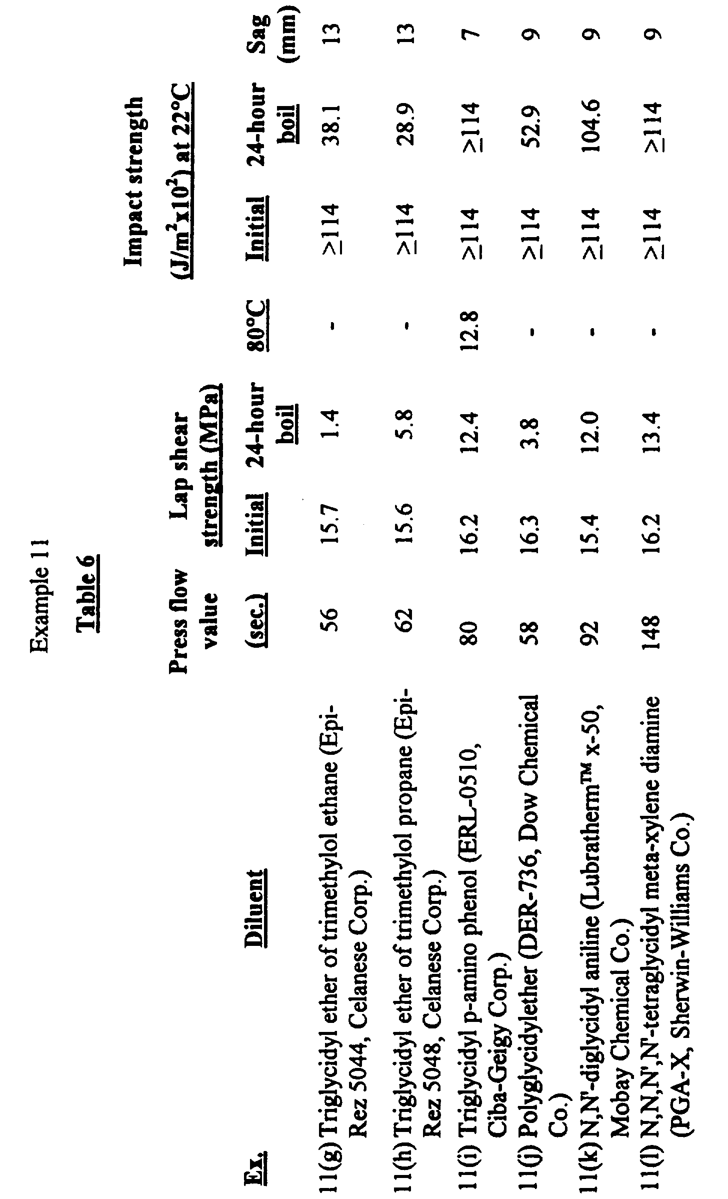

### Example 12

In Example 12 compositions were prepared as in Examples 11(a) to 11(c) and 11(e), respectively, except that the amount of Cab-O-Sil™ TS 720 was increased to 4 parts by weight and in Example 12(e) a composition was prepared as in Example 11(a), except the aluminum powder was reduced to 12.5 parts by weight and the Cab-O-Sil TS-720 was reduced to 3.5 parts by weight. Each composition was tested for press-flow value, sag, lap shear strength, and impact strength. The results are shown in Table 9. As can be seen from the data in Table 9, an increase in the amount of the flow control agent or a reduction in the amount of the aluminum powder filler provides improved sag resistance over that of Examples 11(a) to 11(c) amd 11(e).

**Table 7**

| | | | **Lap shear strength (MPa)** | | **Impact strength (J/mx10) at 22°C** | | |
|---|---|---|---|---|---|---|---|
| **Ex.** | **Diluent** | **pressflow value (sec)** | **Initial** | **24-hour boil** | **Initial** | **24-hour boil** | **Sag (mm)** |
| 12(a)MK-107 | | 65 | 15.6 | 7.1 | ≥114 | 65 | 0 |
| 12(b)WC-69 | | 90 | 14.6 | 11.2 | ≥114 | ≥114 | 0 |
| 12(c)WC-65 | | 80 | 14.3 | 9.7 | ≥114 | ≥114 | 0 |
| 12(d)Epotuf-37053 | | 70 | 14.8 | 10.8 | ≥114 | ≥114 | 0 |
| 12(e)MK-107 | | 46 | 16.2 | 1.8 | 110 | 53 | 3 |

## Claims

1. a storage-stable, thermally curable, one-part epoxy resin composition comprising a curable epoxide resin; an aliphatic or non-aromatic cyclic polyol having 2 to 18 carbon atoms, at least one hydroxy group of said polyol being primary and at least two hydroxy groups of said polyol being primary or secondary, and said polyol being free of strong acid groups, amide groups and electron-withdrawing substituents in the α-position in relation to the carbon atoms attached to the methylol groups of the polyol; provided that said polyols also include derivatives thereof being the reaction product of said polyols with di or poly isocyanates or di or poly carboxylic acids wherein the molar ratio of said polyol to said isocyanate or said carboxylic acid is 1:1; said epoxide resin and said polyol being present in amounts such that the hydroxyl to epoxide ratio is 0.5:1 to 1:1, and a catalytic amount of an imidazole compound selected from
(a) compounds represented by the formula
M¹(L¹)ₐ(X¹)_{b}
where M¹ is Ni⁺⁺, CU⁺⁺, or Co⁺⁺,
L¹ is 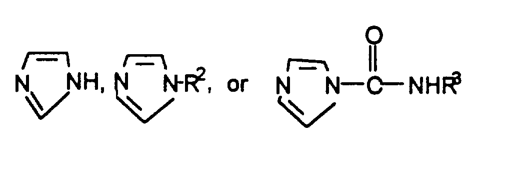
where R is alkyl having 1 to 18 carbon atoms, cyanoalkyl having 1 to 4 carbon atoms, phenyl, or substituted phenyl, and R³ is alkyl having 1 to 18 carbon atoms, phenyl, or substituted phenyl,
X¹ is -R⁴(COO⁻)₂ where R⁴ is phenyl, naphthyl, or CₘH₂ₘ where m is 1, or 2, or
X¹ is -R⁵(COO⁻)ₑ
where R⁵ is phenyl or naphthyl
and e is 3, or 4, or
X¹ is an anion of a strong inorganic acid having a pKₐ of less than 2,
a is 2, 4 or 6, and
b is 0.5, 0.67, 1, or 2 depending on the valence of X¹;
(b) compounds represented by the formula LX
where L is 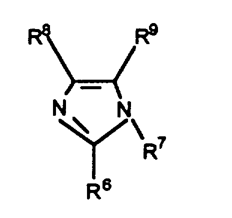
where R⁶ is -H,-CₙH₂ₙ₊₁ or 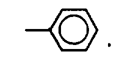
n being a number of from 1 to 16,
R⁷ is -H, -CH₃, -C₂H₅, -C₂H₄CN, or 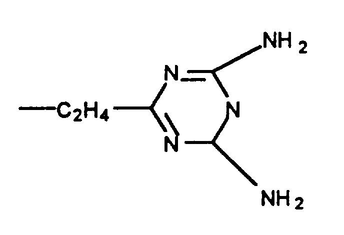
R⁸ is -H, -CH₃, -C₂H₅, -CH₂OH, or 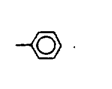
R⁹ is -H,
X is -R⁴(COOH)₂ where R⁴ is phenyl naphthyl, or CₘH₂ₘ where m is 1, or 2, or
X is -R⁵(COOH)_{c} where R⁵ is phenyl or naphthyl and e is 3, 4, or 5, or
X is isocyanuric acid, and
(c) compounds represented by the formula M³(L³)ₑ
where M³ is Ni⁺⁺, CU⁺⁺, or Co⁺⁺, Zn⁺⁺, CU⁺, or Ag⁺,
L³ is 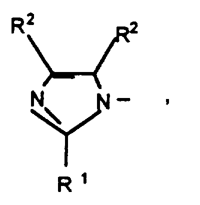
where R¹ is -H, 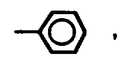 or -CₙH₂ₙ₊₁, n being a number of from 1 to 16, and each R is -CH₃, 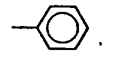 or -CH₂OH, e is 1 or 2;
(d) compounds represented by the formula L⁴
where L ⁴ is 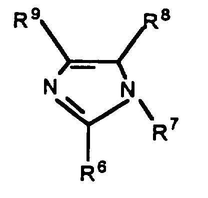
where R₆, R₇, R₈, and R₉ are the same for compound (b); and
(e) compounds represented by the formula 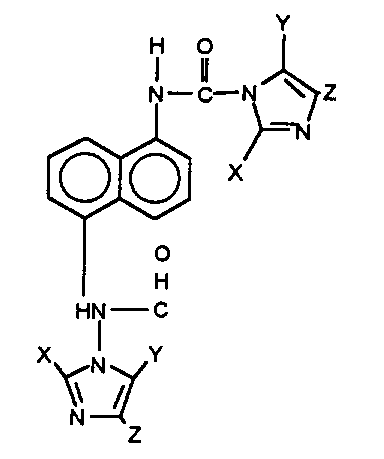 wherein X, Y, and Z may be the same or different, and each may be hydrogen, a lower alkyl or aryl having 1-12 carbon atoms, halo or nitro, wherein said composition has a pot life of at least three days at 22°C, said pot life being the length of time for the viscosity of said composition to double and said composition has a reactivity such that the length of time for an exotherm to peak when tested using a differential scanning calorimeter held at a temperature of 137°C is less than 10 minutes.

2. A composition according to claim 1 wherein said polyol is insoluble in said epoxide.

3. A composition according to claim 1 or claim 2 wherein said imidazole comprises from 1 to 10 weight percent ofthe composition.

4. A composition according to any preceding claim wherein said imidazole is insoluble in said epoxide.

5. A composition according to any preceding claim further comprising at least one toughening agent.

6. A composition according to claim 5 wherein said toughening agent comprises from 8 to 34 weight percent of the composition.

7. A composition according to claim 5 or claim 6 comprising a carboxyl-terminated butadiene acrylonitrile toughening agent and a core-shell polymer toughening agent.

8. A composition according to claim 1 wherein said composition comprises:
30 to 50 parts by weight ofthe diglycidyl ether of bisphenol A;
10 to 20 parts by weight of an adduct of a carboxyl-terminated butadiene acrylonitrile toughening agent and the diglycidyl ether of bisphenol A;
3 to 10 parts by weight of an acrylic core-shell graft polymer;
a sufficient amount of said polyol to provide a hydroxy to epoxide ratio of 0.5:1 to 1:1
2 to 5 parts by weight of said imidazole; and
10 to 50 parts by weight of a filler.

9. A method for adhering a first substrate to a second substrate comprising the steps of coating first substrate with a composition as claimed in any preceding claim, contacting said second substrate with said coated first substrate, and heating said substrates to a temperature in the range of 100 to 200°C to cure said composition and bond said substrates together.

## Patentansprüche

1. Lagerstabile, warmhärtbare, einkomponentige Epoxidharz-Zusammensetzung, umfassend ein härtbares Epoxidharz; ein aliphatisches oder nicht-aromatisches cyclisches Polyol mit 2... 18 Kohlenstoffatomen, wobei mindestens eine Hydroxy-Gruppe des Polyols primär ist und mindestens zwei Hydroxy-Gruppen des Polyols primär oder sekundär sind und das Polyol frei ist von starken Säuregruppen, Amid-Gruppen und elektronenabziehenden Substituenten in der α-Stellung in Bezug auf die Kohlenstoffatome, die sich an den Methylol-Gruppen des Polyols angebracht sind; und zwar unter der Voraussetzung, daß die Polyole ebenfalls Derivate davon umfassen, die das Reaktionsprodukt der Polyole mit Di- oder Polyisocyanaten oder Di- oder Polycarbonsäuren sind, worin das Molverhältnis des Polyols zu dem Isocyanat oder der Carbonsaüre 1:1 ist; wobei das Epoxidharz und das Polyol in solchen Mengen vorliegen, daß das Verhältnis von Polyol zu Epoxid 0,5:1 ... 1:1 beträgt, sowie eine katalytische Menge einer Imidazol-Verbindung, ausgewählt aus:
(a) Verbindungen, dargestellt durch die Formel:
M¹(L¹)ₐ(X¹)_{b}
worin sind:
M¹ Ni⁺, Cu⁺ oder Co⁺ 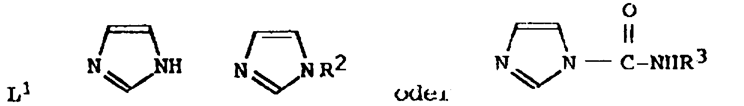
worin R Alkyl mit 1 ... 18 Kohlenstoffatomen, Cyanalkyl mit 1 ... 4 Kohlenstoffatomen, Phenyl oder substituiertes Phenyl ist, R³ ist Alkyl mit 1 ... 18 Kohlenstoffatomen;
X¹ -R⁴ (COO⁻)₂, worin R⁴ Phenyl, Naphthyl oder CₘH₂ₘ ist, worin m 1 oder 2 ist; oder es ist
X¹ -R⁵(COO⁻)ₑ, worin R⁵ Phenyl oder Naphthyl ist, und e ist 3 oder 4; oder es ist.
X¹ ein Anion einer starken anorganischen Säure mit einem pKa kleiner als 2; und je nach den Wertigkeit von X¹ sind:
a 2, 4 oder 6 und
b 0,5; 0,67; 1 oder 2;
(b) Verbindungen, dargestellt durch die Formel:
LX
worin sind: 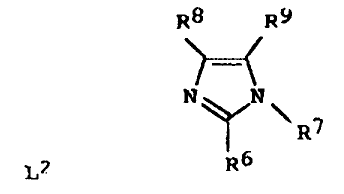
worin R⁶ Wasserstoff, -CₙH₂ₙ₊₁ oder 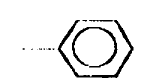 ist, und n eine Zahl von 1 ... 16,
R⁷ Wasserstoff, -CH₃, -C₂H₅, -C₂H₄CN oder 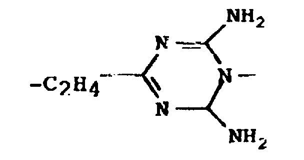 ist,
R⁸ Wasserstoff, -CH₃, -C₂H₅, -CH₂OH oder 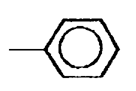
R⁹ ist wasserstoff;
X -R⁴(COOH)₂, worin R⁴ Phenyl , Naphthyl oder CₘH₂ₘ, worin 1 oder 2 ist; oder es ist
X -R⁵(COOH)ₑ, worin R⁵ Phenyl oder Naphthyl, und e ist 3, 4 oder 5; oder es ist
X Isocyanursäure; sowie
(c) verbindungen, dargestellt durch die Formel:
M³(L³)ₑ
worin sind:
M³ Ni⁺, Cu⁺ oder Co⁺ Zn⁺, Cu⁺, Ag+; 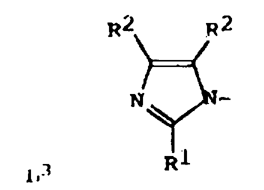
worin R¹ Wasserstoff, 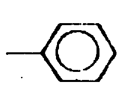 oder -CₙH₂ₙ₊₁ ist und n eine Zahl von 1 ... 16, und jedes R ist -CH₃, 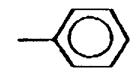 oder -CH₂OH
e ist 1 oder 2;
(d) Verbindungen, dargestellt durch die Formel:
L⁴
worin sind: 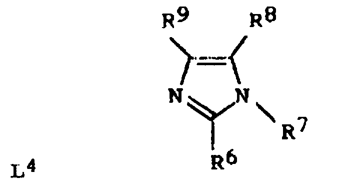 worin R⁶ R⁷ R⁸ R⁹ die gleichen sind wie für die Verbindung (b); sowie
(c) Verbindungen, dargestellt durch die Formel: 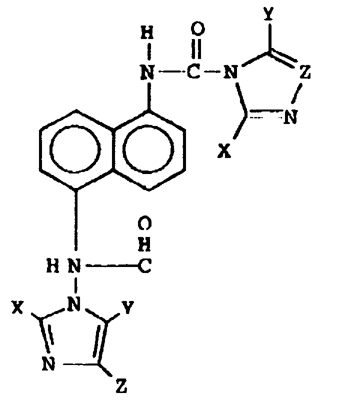 worin X, Y und Z gleich oder verschieden sein können und jedes sein kann: Wasserstoft, ein niederes
Alkyl oder Aryl mit 1 ... 12 Kohlenstoffatomen, Halogen oder Nitro,
wobei die Zusammensetzung eine Topfzeit von mindestens drei Tagen bei 22 °C hat und die Topfzeit die jenige Dauer ist, während der sich die Viskosität der Zusammensetzung verdoppelt, und wobei die Zusammensetzung ein solches Reaktionsvermögen hat, bei dem die Dauer für einen exothermen Verlauf bis zum Maximum kleiner ist als 10 Minuten, getestet unter Verwendung eines Differentialscanningcalorimeters, das bei einer Temperatur von 137°C gehalten wird.

2. Zusammensetzung nach Anspruch 1, bei welcher das Polyol in dem Epoxid unlöslich ist.

3. Zusammensetzung nach Anspruch 1 oder 2, bei welcher das Imidazol 1 ... 10 Gewichtsprozent der Zusammensetzung ausmacht.

4. Zusammensetzung nach einem der vorgenannten Ansprüche, bei welcher das Imidazol in dem Epoxid unlöslich ist.

5. Zusammensetzung nach einem der vorgenannten Ansprüche ferner umfassend einen Schlagfestmacher.

6. Zusammensetzung nach Anspruch 5, bei welcher der Schlagfestmacher 8 % ... 34 Gewichtsprozent der Zusammensetung ausmacht.

7. Zusammensetzung nach Anspruch 5 oder 6, umfassend mit Carboxyl-terminiertes Butadienacrylnitril als Schlagfestmacher und ein Kern-Mantelpolymer-Schlagtestmacher,

8. Zusammensetzung nach Anspruch 1, bei welcher die Zusammensetzung umfaßt:
30 ... 50 Gewichtsteile Diglycidylether von Bisphenol A 10 ... 20 Gewichtsteile eines Adduktes von carboxylterminiertem Butadienacrylnitril-Schlagfestmacher und Diglycidylether von Bisphenol A;
3 ... 10 Gewichtsteile eines acrylischen Kern-Mantel-Pfropfpolymers;
eine ausreichende Menge des Polyols zur Gewährung eines Hydroxy/Epoxid-Verhältnisses von 0,5:1 ... 1:1;
2 ... 5 Gewichtsteile des Imidazols;
10 ... 50 Gewichtsteile eines Füllstoffes.

9. Verfahren zum Adhärieren eines ersten Substrats mit einem zweiten Substrat, umfassend die Schritte:
Beschichten des ersten Substrats mit einer Zusammensetzung nach einem der vorgenannten Ansprüche;
Kontaktieren des zweiten Substrats mit dem ersten beschichteten Substrat; und
Erhitzen der Substrate auf eine Temperatur im Bereich von 100 ° ... 200 °C, um die Zusammensetzung zu härten und die beiden Substratc verkleben.

## Revendications

1. Composition de résine époxy d'une seule pièce, stable pendant le stockage et à durcissement thermique, comprenant une résine d'époxyde durcissable, un polyol cyclique aliphatique ou non aromatique ayant de 2 à 18 atomes de carbone, au moins un groupe hydroxy dudit polyol étant un groupe primaire, et au moins deux groupes hydroxy dudit polyol étant des groupes primaires ou secondaires, et ledit polyol ne contenant pas de groupes d'acides forts, de groupes amides et de substituants retirant des électrons en position a par rapport aux atomes de carbone fixés sur les groupes méthylol du polyol ; avec la condition que lesdits polyols comprennent aussi des dérivés de ceux-ci, qui sont le produit de réaction desdits polyols avec des diisocyanates ou des polyisocyanates ou des acides dicarboxyliques ou polycarboxyliques, le rapport molaire dudit polyol audit isocyanate ou audit acide carboxylique étant de 1:1 ; ladite résine d'époxyde et ledit polyol étant présents en des quantités telles que le rapport du groupe hydroxyle à l'époxyde soit de 0,5:1 a 1:1, et une quantité catalytique d'un composé imidazole choisi parmi :
(a) des composés représentés par la formule
M¹(L¹)ₐ(X¹)_{b}
où M¹ est Ni⁺⁺, Cu⁺⁺ ou Co⁺⁺,
L¹ est 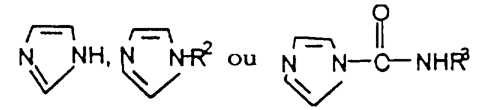
où R est un groupe alkyle ayant de 1 à 18 atomes de carbone, un groupe cyanoalkyle ayant de 1 à 4 atomes de carbone, le groupe phényle ou phényle substitué, et R³ est un groupe alkyle ayant de 1 à 18 atomes de carbone, le groupe phényle ou phényle substitué,
x¹ est -R⁴(COO⁻) où R⁴ est le groupe phényle, naphtyle ou CₘH₂ₘ, où m vaut 1 ou 2, ou
x¹ est -R⁵(COO⁻)ₑ, où R⁵ est le groupe phényle ou naphtyle, et e vaut 3 ou 4, ou
x¹ est un anion d'un acide minéral fort ayant une valeur de pKₐ de moins de 2,
a vaut 2, 4 ou 6, et
b vaut 0,5, 0,67, 1 ou 2 selon la valence de x¹;
(b) des composés représentés par la formule LX
où L est 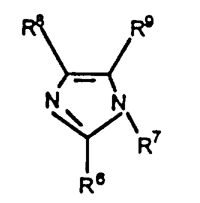
où R⁶ est -H, -CₙH₂ₙ₊₁ ou 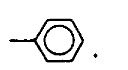
n étant un nombre de 1 à 16,
R⁷ est -H, -CH₃, -C₂H₅, -C₂H₄CN, ou 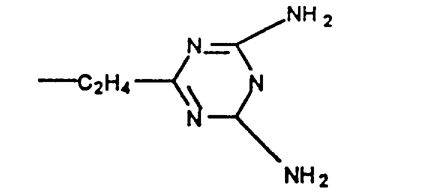
R⁸ est -H, -CH₃, -C₂H₅, -CH₂OH, ou 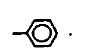
R⁹ est -H,
X est -R⁴(COOH)₂ où R⁴ est le groupe phényle naphtyle ou CₘH₂ₘ, où m vaut 1 ou 2, ou
X est -R⁵(COOH)ₑ, où R⁵ est le groupe phényle ou napthyle, et e vaut 3, 4 ou 5, ou
X est l'acide isocyanurique, et
(c) des composés représentés par la formule M³(L³)ₑ, où M³ est Ni⁺⁺, CU⁺⁺ ou Co⁺⁺, Zn⁺⁺, CU⁺ ou Ag⁺,
L³ est 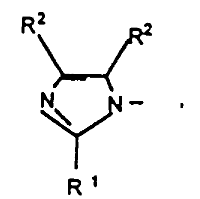
où R¹ est -H, 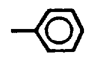 ou -CₙH₂ₙ₊₁, n étant un nombre de 1 à 16,
et chaque R est -CH₃, 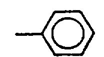 ou -CH₂OH, e valant 1 ou 2 ;
(d) des composés représentés par la formule L⁴
où L⁴ est 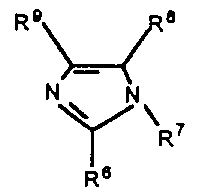
où R⁶, R⁷, R⁸ et R⁹ sont tels que définis pour le composé (b) ; et
(e) des composés représentés par la formule 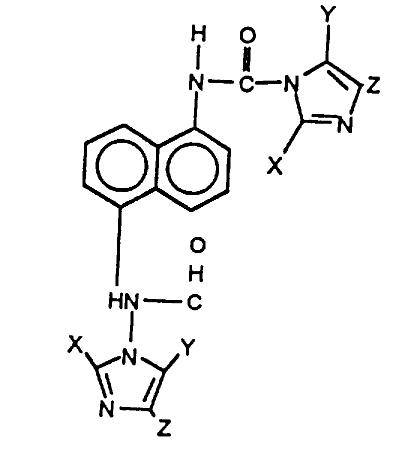 où X, Y et Z peuvent être identiques ou différents et chacun d'entre eux peut être un atome d'hydrogène, un groupe alkyle inférieur ou aryle ayant de 1 à 12 atomes de carbone, un groupe halogéno ou nitro,
ladite composition ayant un temps limite d'utilisation d'au moins trois jours à 22°C, ledit temps limite d'utilisation étant la durée pendant laquelle la viscosité de ladite composition double de valeur, et ladite composition a une réactivité telle que le laps de temps pendant lequel un exotherme atteint un pic est inférieur à 10 minutes quand on la teste en utilisant un calorimètre différentiel à balayage maintenu à la température de 137°C.

2. Composition selon la revendication 1, dans laquelle ledit polyol est insoluble dans ledit époxyde.

3. Composition selon la revendication 1 ou la revendication 2, dans laquelle ledit imidazole représente de 1 à 10 % en poids de la composition.

4. Composition selon l'une quelconque des revendications précédentes, dans laquelle ledit imidazole est insoluble dans ledit époxyde.

5. Composition selon l'une quelconque des revendications précédentes, comprenant, en outre, au moins un agent de durcissement.

6. Composition selon la revendication 5, dans laquelle ledit agent de durcissement représente de 8 à 34 % en poids de la composition.

7. Composition selon la revendication 5 ou la revendication 6, comprenant un agent de durcissement du type butadiène-acrylonitrile à terminaison carboxyle et un agent de durcissement polymère du type noyau-enveloppe.

8. Composition selon la revendication 1, ladite composition comprenant :
30 à 50 parties en poids d'éther diglycidylique de bisphénol A ;
10 à 20 parties en poids d'un produit d'addition d'un butadiène-acrylonitrile à terminaison carboxyle et d'éther diglycidylique de bisphénol A ;
3 à 10 parties en poids d'un copolymère acrylique greffé du type noyau-enveloppe ;
une quantité suffisante dudit polyol de manière à fournir un rapport hydroxy:époxyde de 0,5:1 à 1:1 ;
2 à 5 parties en poids dudit imidazole ; et
10 à 50 parties en poids d'une charge.

9. Procédé de collage d'un premier substrat sur un deuxième substrat, comprenant les étapes consistant à revêtir le premier substrat d'une composition telle que revendiquée dans l'une quelconque des revendications précédentes, amener le deuxième substrat au contact dudit premier substrat revêtu et chauffer lesdits substrats à une température comprise entre 100 et 200°C pour durcir ladite composition et coller ensemble lesdits substrats.
